# EUROPEAN PATENT APPLICATION

(11) **EP 2 454 944 A1**
(43) Date of publication of application: **23.05.2012**
(21) Application number: 10382306.8
(22) Date of filing: 18.11.2010
(51) Int. Cl.: A22C 7/00

(54) **Mold for food**

(71) Applicant: Industries FAC, S.L., 17430 Santa Coloma de Farners (ES)
(72) Inventor: Campos Oritz, Francesc, 17430, Santa Coloma De Farners (ES)
(74) Representative: Manresa Val, Manuel

(57) **Abstract**

It comprises a body (1) shaped like a hollow rectangular prism defining a cavity (4), with two openings (2,3) at each end, connected together by cavity (4), characterised in that said mould is made from stainless steel and comprises two sets of undulations (7,8), two opposite two, located near said openings (2,3), with said undulations (7,8) appearing both on the outside of the mould as the positive and on the inside of the mould as the negative.

## Description

Mould for foodstuffs, of the type comprising a body shaped as a hollow rectangular prism defining a cavity, with two openings at each end, connected together by the cavity and characterised in that the said mould is made from stainless steel and comprises two sets of undulations, two opposite two, near said openings, with said undulations appearing on both the outside of the mould as positive, and on the inside of the mould as negative.

### BACKGROUND OF THE INVENTION

Moulds are known in the state of the art that contains a check element like a saw either inside or outside.

So, Utility Model No. 201000042 (ES1071717) "CONDITIONING MOULD FOR FOODSTUFF PRODUCTS", from 2010, in the name of Mr. Francisco MONTERO ARCAS, which relates to a conditioning mould for foodstuffs, particularly cured meat products, such as ham and the like, which consists of one of the types that is made up of a resistant, oblong body shaped like a tubular prism that is made from a foodstuff and which, at one end, is closed with a hingeable lid, whereas it is open at the other end and allows the insertion of a transverse wall which, like a presser plate or piston slides inside the oblong body, and activating said wall by external means determines the application via the outer face of said wall of a compression force on the product located between said lid and the internal face of said transverse wall, until a predetermined degree of compression is achieved which is maintained during the freezing of the product, thanks to the fact that the oblong body with a tubular shape has, in two inner areas, opposite of its inner face and in the direction of the larger dimension thereof, some elongated depressions shaped like sawtooth zips that constitute a check device for pawl elements which, obliged by elastic means and assembled on the edges of a sliding transversal wall, lie opposite said elongated depressions, in which meshing consecutively in the sawteeth thereof as said transverse wall advances in a sliding fashion, characterised in that the presser plate, which slides along the inside of a resistant oblong body with a tubular shape, has aligned in opposition along its dorsal section pairs of swinging pawls which, located in a like number of housing notches therefore arranged in opposition and which are equally located on two opposite sides of the presser plate, each swing around their own axis located in a centred point therein for this purpose and are anchored to the walls of said housing notches, with each dorsal end of the swinging pawl being obliged by the action of a spring which, seated on a greater plane of the presser plate, determines that in the swinging the front end of the pawl, on which there are formed indentations with isoscelic angled straight section teeth and a seat that limits the swinging of the pawl by said seat lying on an endstop surface of the presser plate, automatically adopts a full mesh position in the teeth in the indentations, which as they also have an isoscelic angled straight section, are arranged in an elongated depressed area in front of the swinging pawl and are located on a wall of the resistant oblong body that is opposite said swinging pawl, with the set of swinging pawls and elongated depressed areas forming a presser plate check device.

The same previous applicant is the inventor of Spanish Patent No. 200701904 "MOULD FOR SHAPING FOODSTUFFS", from 2007, in the name of the Spanish firm OF COURSE SOLUTIONS, S.L., relating to a mould for shaping foodstuffs, particularly cured meat products, such as ham and the like, which consists of one of the type that is made up of a resistant oblong body shaped like a tubular prism which is made from a foodstuff material and which, at one end, is closed with a hingeable lid, but which at the other end is open and allows the insertion of a transverse wall which slides inside the oblong body, the pressing of said wall by external means and the application via said wall of a compression force on the product located between said lid and said transverse wall, until the freezing of the product after it has been sliced, characterised in that the oblong body with a tubular shape has, in two lower opposite areas of its inner face and in the direction of the greater dimensions of the oblong body, some elongated depressions shaped like sawteeth, which constitute a check device for pawl elements which, obliged by elastic means and assembled on the edges of a sliding transverse wall, lie opposites said elongated depressions, which mesh consecutively with the sawteeth thereof as the said transverse wall advances in sliding fashion, which advance movement said transverse wall performs in the direction towards an openable lid which is at the end of the oblong body opposite the end thereof which, being open, allows the insertion of the transverse wall.

Also German Patent No. 2920048 "HAM PRESS" is known, from the year 1979, in the name of Mr. Paul KÖLMEL, which relates to a ham press wherein the ham is inserted into a cylindrical mould, as if it were in two halves, and a lid presses it. Said mould, as can be seen in the figure comprises a check system, like a saw, inside, where the lid is fixed, with the check system preventing the pressure that the ham may apply to the cylinder, moving the lid outwards.

Moreover, said saw-like check mechanism is also known outside the mould, such as for example the one referenced in Patent US2597592, from the year 1948, in the name of Mr. George MINDER.

Also in the state of the art the use of moulds without any type of check mechanism are known, but with a lid arranged in the mould cavity and, covers it. Said lid has two punching means, one for each smaller side, that sink into the inner walls of the smaller sides of the mould, such that by means of the force that is used when pressing said punching means against the walls of the mould, it is possible to keep the lid fixed so that it does not move.

Finally, also in the state of the art we find lids with check toothing, that is anchored in cantilever arrangement in the mouth of the mould. So, in European Patent No. 0317519 "AUTOMATIC MOULD UNLOADER FOR HAMS AND SIMILAR PRODUCTS", from the year 1988, in the name of the firm CESARE FIORUCCI S.p.A., which relates to a mould unloader for hams and the like, which performs, completely automatically, the operations of removing the lid from the mould, turning the open mould containing the product, removing the mould, transporting and removing the product unloaded from the mould, and the empty containers, characterised in that said mould unloader comprises, in a sequence along a horizontal work chain, a first station for unhooking and removing the lid, a turnable plate for turning upside down the container together with the product, and a second station for removing the mould, with the product unloaded from the mould being removed at one end of the work chain, on the side opposite the entrance of the closed moulds, with transport means being provided on the side with respect to said work chain to transport and remove the empty containers.

### BRIEF DESCRIPTION OF THIS INVENTION

This invention falls within the mould sector, particularly, the sector of moulds for foodstuffs.

The closest document is Spanish Patent No. 200701904 (ES2323212). Said document uses a check system located inside the mould so that once the food to be moulded is placed inside, the lid remains fixed and it cannot be released unless a user does so.

Also, on the side opposite the side where the lid is arranged, there is another lid, like a wall that blocks the exit on that side, and which is arranged vertically, by means of guides.

The above-mentioned mould, for obvious construction purposes, can only be made if it is manufactured in plastic, because it would not be feasible to make the check mechanism, as it is explained in this invention, out of stainless steel.

The check mechanism has a drawback derived from when the removal of the piece of moulded meat from inside the mould is automated. So, if it is desired to remove it automatically, by a pusher, the lids and the product cannot be removed, it is not feasible, because of the opposite lid, which is removed manually and is arranged vertically.

If a system were chosen wherein on both sides there is a lid check mechanism, said check mechanism would prevent moving one lid by pushing the other one.

Another problem is that, as indicated in the invention's background documents, if the company using the moulds has a mould with the check device on the outside, it is not possible to use said lid in the model where the check mechanism is on the inside, and vice versa, which means that companies have to be very careful when selecting their mould model.

The check toothing considerably hinders cleaning the inside of the moulds, because of the sharp edges, also they do not provide easy access to the inside of the tooth so that it can be cleaned perfectly. Also, when removing the moulded product, said check mechanism damages the moulded product, because it acts as a check device for the actual product and scratches or erodes the foodstuff that has already been moulded.

As indicated above, the mould from the closest document is made of plastic, since it is virtually economically non-viable to produce the toothing, inside, on one single side.

The fact that it is made of plastic causes additional drawbacks. The first is that plastic moulds cannot be very long, because they bend, and this is very interesting with respect to the fact that companies using moulds increasingly want to place several parts inside each mould.

At the same time, plastic moulds are only profitable in large amounts, and therefore they are very expensive for small companies who may need them.

Finally, plastic moulds break at high temperatures, unless they are very thick, which therefore increases their final price.

The inventor has thought about how to solve the problem described above in an innovative, and more economic way.

First of all, the undulations on the two ends of the mould, as shown in the drawings, allow, when stripping the mould, a pushing means to push from one of the lids and drag the moulded product together with the lid from the other end, and remove the two lids and the moulded product at the same time, without having to remove the lids manually, as it is done to date.

The inventor has observed that the undulations are enough to maintain a lid with notches, like the ones available on the market, inside the mould, without it being a check mechanism, and with the advantage that with a pusher it can move in the opposite direction.

Secondly, it is foreseen that the lids are adjustable at the two ends, this way the person who is moulding can adjust to any requested moulding size, simply by moving the lids in one direction or the other.

Thirdly, the mould is made from stainless steel. This is so that it withstands low temperatures without breaking, as happens with plastic. Also since it is a stainless steel mould, much longer moulds can be made and therefore more than one foodstuff for moulding can be placed inside, and this way several parts are moulded at the same time with one single mould, and all this means a saving in moulds, as less are required, and in production because various foodstuffs are inserted at the same time into one and the same mould, and not one foodstuff per mould.

Fourthly, when made in stainless steel it is also possible to make undulations on some sides of the mould, so that on the outside we would have the positive side of the moulding and on the inside, the negative, or vice versa. None of the invention's background documents give this option, because they are plastic moulds, even though this is not mentioned, and so it is no feasible to make the undulations on the mould body.

Fifthly, thanks to the undulations it is possible to clean the mould better as there are no bends where the foodstuff remains. At the same time, it is worth adding that as it is not a check device the product that comes out of the mould, is not damaged or torn like products do come out of the check mechanisms if they come out on the side where the toothing is located.

Sixthly, stainless steel is more useful if manufacturing medium and small sized parts, in other words, for most companies, who do not order large quantities of moulds.

Finally, if a company had lids of the type that is fixed on the outside, as in Patent US2597592, even if the mould could not be used in the automated stripping system, it could equally be used, for example, if necessary. In other words, those with moulds like the ones described above, can continue using the lids.

An object of this invention is a mould for foodstuffs, of the type comprising a body shaped like a hollow rectangular prism defining a cavity, with two openings at each end, connected together by the cavity characterised in that the said mould is made from stainless steel and comprises two sets of undulations, two opposite two, located near said openings, with said undulations appearing both on the outside of the mould as positive and on the inside of the mould as negative.

### BRIEF DESCRIPTION OF THE DRAWINGS

In order to facilitate the explanation a sheet of drawings is attached to this specification, illustrating a practical embodiment, which is provided as a non-limiting example of the scope of this invention:
- Figure 1 is an elevated view of the object of this invention, and
- Figure 2 is a sectional view along line II-II of Figure 1;

### SPECIFIC EMBODIMENT OF THE UTILITY MODEL

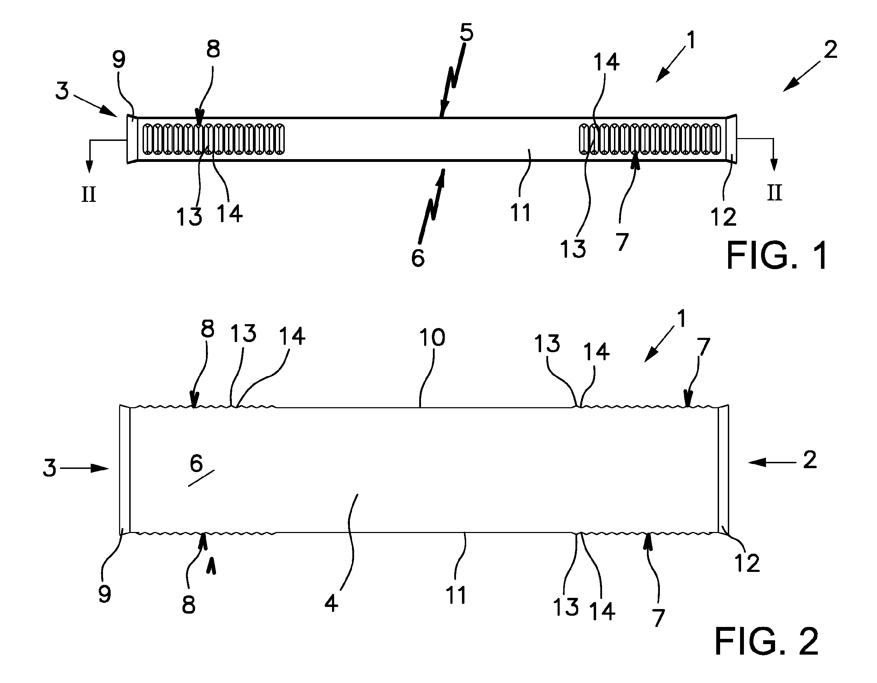

Figure 1 shows a body 1 with its two larger sides 5, 6 and one of its smaller sides 11, openings 2, 3, undulations 7,8 with their peaks 13, 14 and lips 9, 12.

Figure 2 illustrates body 1 with its two smaller sides 10, 11 and one of its larger sides 6, a cavity 4, openings 2, 3, undulations 7,8 with their peaks 13, 14 and lips 9, 12.

So, in a specific embodiment, in order to mould a piece of foodstuff, for example ham, we proceed as follows.

One of openings 3 is closed, by means of a first lid, known in itself, which has inner anchoring means. Said lid must fit into the cavity perimeter.

As the lid is inserted, the anchoring means pass along undulations 10, 11 until they stop at the desired undulation, which determines the desired measurement to be obtained.

Undulations 10, 11, are not check undulations, in other words, their peaks 13, 14 are rounded to allow the lid's anchoring means to pass from one to the other at a certain pressure and in both directions, so that when stripping the mould, it is possible to push in the direction opposite said lid and this come out easily from inside cavity 4, as explained below.

Then the ham to be moulded is inserted into the other opening 2, together with a second lid provided with inner anchoring means.

A pusher (not shown) pushes said lid with the ham along cavity 4 until the ham arrives to touch the first lid. The pusher will continue pushing until, between the second lid that pushes and the first lid that withstands the pressure, and exerts pressure on the ham in the opposite direction, the determined pressure is reached.

The second lid ends up lying in undulations 7,8 in the same way as explained for the first lid.

To strip the mould, we proceed as follows:
A pusher (not shown), which could be the same as the one used before, would exert a pressure against the second lid for example, it could easily be from the first lid. Said pressure has to be greater than that withstood by the two lids. When the lids yield, the second lid drags the moulded ham and this last one to the first lid, coming out all through of opening 3.

This is because the first lid can advance in the opposite direction to the direction in which it is inserted, because undulations 7,8 do not prevent the lid from moving in both directions. At the same time, neither do undulations 7,8 prevent the second lid from continuing to advance.

This option is not feasible in the moulds with check mechanisms, because the actual check mechanism prevents a lid from moving in the opposite direction, when pressure is exerted on it.

Also, the moulded ham comes out unmarked, as undulations 7,8 do not damage the moulded product. Also it could also be arranged so that peaks 13,14 are orientated outwards, so that undulations 7,8 are not imprinted on the moulded ham, when it exits or enters the mould.

The mould for foodstuffs, basically comprises a body 1, which as illustrated in the two figures has a hollow, rectangular prism shape, defining a cavity 4, which is where both the lids and the ham to be moulded are installed.

Said mould 1 also has two openings 2,3 at each end, which is where both the lids and the foodstuff to be moulded, in this case ham, are inserted. Said openings 2,3 are connected together by means of cavity 4.

Said mould is made from stainless steel, as it has been found to be the most suitable material, following the explanations provided in the BRIEF DESCRIPTION OF THE INVENTION section.

In this embodiment, on smaller sides 10,11 of mould body 1, two sets of undulations 7,8 have been provided, one set of two for each end, two facing two.

When undulations 7,8 are made on stainless steel, said undulations 7,8 can appear both on the outside of mould body 1 and the inside, with the outside part being considered the positive (of a mould) and the inner part the negative.

Also, optionally, undulations 7, 8 are shaped such that peaks 13,14 of said undulations 7,8 are orientated towards the outside of body 1, without taking up space inside cavity 4.

This has several advantages, on the one hand, as indicated, it does not take up space intended for the product to be moulded, but on the other hand, and very importantly, it does not damage the moulded product in any way, either when it enters cavity 4 of body 1 or when it leaves it, because as the peaks 14 are rounded, they do not cut the moulded product.

There is also the possibility of providing undulations 7,8 successively along one same smaller side 10,11. In other words, this consists in joining undulations 7,8 on one and the same smaller side 10,11, so that the undulations at one end 7 join the undulations on the other end 8, adding undulations to the space left between some undulations 7 and other undulations 8. This way, it would be possible to adjust the mould overall using the lids.

To facilitate the entry of the product to be moulded, it is envisaged that in openings 2,3 lips 9 be shaped, that are tilted towards cavity 4, increasing the entrance of openings 3,4. Their function is the same as that of a funnel, to try to lead inside cavity 4, the product to be moulded, which initially may be wider than openings 3,4.

This invention describes a new mould for foodstuffs. The examples mentioned herein are non-limiting thereof, and therefore it can have different applications and/or adaptations, all within the scope of the following claims.

## Claims

1. Mould for foodstuffs, of the type comprising a body (1) shaped like a hollow rectangular prism defining a cavity (4), with two openings (2,3) at each end, connected together by cavity (4), **characterised in that** said mould is made from stainless steel and comprises two sets of undulations (7,8), two opposite two, located near the said openings (2,3), with said undulations (7,8) being visible both on the outside of the mould as positive, and inside the mould as negative.

2. Mould according to claim 1, **characterised in that** said undulations are arranged on the smaller sides (10,11) of body (1).

3. Mould, according to claim 1 or 2, **characterised in that** undulations (7,8) are shaped so that the peaks (13,14) of said undulations (7,8) are orientated towards the outside of body (1), without taking up space inside cavity (4).

4. Mould, according to claim 3 when dependent on claim 2, **characterised in that** said undulations (7,8) are arranged successively along each of said smaller sides (10,11) of body (1).

5. Mould, according to some of the previous claims, **characterised in that** in each opening (2,3) lips (9) have been arranged, in tilted fashion, which extend the entry space of the respective opening (2,3) on which they are installed.
